# FASCICULE DE BREVET EUROPEEN

(11) **EP 1 028 007 B1**
(45) Date de publication et mention de la délivrance du brevet: **02.05.2003**
(21) Numéro de dépôt: 00102314.2
(22) Date de dépôt: 03.02.2000
(51) Int. Cl.: B60C 1/00, B60C 9/18, B60C 15/06, C08L 21/00

(54) **Amélioration de la durée de vie de pneumatiques à carcasse radiale par utilisation de compositions spécifiques cohésives et faiblement hystérétiques**
Verbesserung der Lebensdauer eines Radialluftreifen durch Verwendung von bestimmten kohäsiven Zusammensetzungen mit geringer Hysterese
Improving a pneumatic radial tire wear life by using specific low hysteresis compositions

(30) Priorité: 11.02.1999 FR 9901766
(43) Date de publication de la demande: 16.08.2000
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Serre, Frédéric, 63960 Veyre-Monton (FR)
(74) Mandataire: Hiebel, Robert

(56) Documents cités:
- EP-A- 0 105 822
- EP-A- 0 738 614
- GB-A- 2 024 119
- US-A- 3 392 773

## Description

La présente invention concerne l'utilisation de compositions de caoutchouc destinées à la fabrication d'enveloppes de pneumatiques en tant que compositions élastomériques de remplissage interne, aussi appelés mélanges coussins, dans la zone basse du pneumatique.

Les pneumatiques à carcasse radiale pour véhicules à moteur portant de lourdes charges à des vitesses plus ou moins élevées, en particulier ceux pour véhicules poids lourds, ont une ossature constituée de renforts ou de nappes de fils métalliques enrobés d'élastomères, à savoir en zone basse une ou plusieurs tringles, une armature de carcasse allant d'une tringle à l'autre et au sommet, une armature de sommet comportant deux ou plusieurs nappes de sommet. Cette ossature est consolidée par des compositions élastomériques. Parmi les pneumatiques à carcasse radiale, ceux destinés à équiper les véhicules portant de lourdes charges à des vitesses plus ou moins élevées, en particulier ceux pour véhicules poids lourds, sont conçus pour pouvoir être rechapés plusieurs fois lorsque la bande de roulement au contact du sol est usée, ce qui implique de disposer de carcasses rechapables n'ayant pas subi de dommages importants après usure d'une ou plusieurs bandes de roulement.

Cependant, il arrive que la durée de vie du pneumatique soit écourtée par apparition d'un dommage dans un profilé de gomme de remplissage, par exemple une cassure, qui peut ensuite se propager jusqu'à la surface interne ou externe du pneumatique entraînant la mise au rebut de l'enveloppe.

Il est souhaitable que la cohésion des mélanges de gomme de remplissage interne soit la plus élevée possible pour éviter ou réduire ces amorces de dommage.

Il est connu de l'homme de l'art que les compositions élastomériques de remplissage interne subissent des déformations à chaque tour de roue, déformations qui engendrent un échauffement élevé néfaste à la durée de vie desdites compositions. En effet, aux températures de fonctionnement souvent supérieures à 100° C, les propriétés mécaniques et le renforcement se dégradent avec le temps par vieillissement thermochimique et/ou thermo-oxydant, avec comme conséquence une moindre résistance aux agressions mécaniques.

Il est donc souhaitable pour éliminer ou tout au moins minimiser au maximum les risques de cassure des mélanges élastomériques de remplissage interne, c'est à dire dépourvus de renforts, que ces mélanges possèdent à la température de fonctionnement du pneumatique une cohésion mécanique élevée mais des caractéristiques de pertes par hystérèse les plus faibles possibles.

L'homme de l'art confronté au problème du compromis échauffement minimum-cohésion élevée à haute température a proposé de nombreuses solutions. Il a ainsi été proposé d'utiliser des compositions élastomériques de remplissage interne, c'est à dire des mélanges coussins, relativement peu hystérétiques sous forme de:
(i) compositions à base de caoutchouc naturel pur ou en coupage avec du polybutadiène, la charge renforçante étant un noir de carbone avec une surface spécifique de préférence inférieure à 110 m2/g et utilisé à un taux d'environ 25 pce (parties en poids pour cent parties d'élastomère), comme décrit dans le brevet US 3392773,
(ii) compositions à base de caoutchouc naturel pur ou en coupage avec du polybutadiène renforcé avec un coupage de noir de carbone et de silice, les taux de noir de carbone usuels étant de 30 à 35 pce et ceux de la silice de 10 à 15 pce,
(iii) compositions à base de caoutchouc diénique et de polybutadiène 1,2-syndiotactique comme décrit dans la demande de brevet JP-A-94/092108.
(iv) compositions à base de caoutchouc naturel, éventuellement en coupage avec un autre élastomère diénique, comprenant du noir de carbone et des fibres de polymère thermoplastique comme décrit dans la demande de brevet JP-A-95/330960.

La demanderesse a découvert qu'il est possible d'obtenir un compromis échauffement-cohésion amélioré et une excellente résistance aux sollicitations mécaniques avec déformations élevées par l'utilisation d'une composition élastomérique de remplissage interne:
(i) à base de caoutchouc naturel ou de polyisoprène synthétique à majorité d'enchaînements cis-1,4, utilisé pur ou en coupage avec un autre élastomère diénique,
(ii) renforcée avec:
   - soit une charge claire choisie parmi les silices de précipitation ou pyrogénées comportant des fonctions SiOH en surface, les alumines de précipitation comportant des fonctions AlOH en surface, un silicoaluminate naturel ou de précipitation comportant en surface à la fois des groupements SiOH et AlOH, ladite charge claire étant utilisée à un taux allant de 15 pce à 40 pce et préférentiellement de 20 pce à 35 pce
   - soit avec un coupage de charge claire comme précédemment décrite et de noir de carbone dont la surface spécifique BET est comprise entre 30 et 160 m²/g de préférence entre 90 et 150 m²/g et dont la structure DBP est comprise entre 80 et 160 ml/100g. Le taux global de charge est ≥ à 15 pce et ≤ à 50 pce et le taux de charge claire en pce est supérieur ou égal à celui du noir de carbone en pce moins 5 pce. La mesure de surface spécifique BET est effectuée selon la méthode de BRUNAUER, EMMET et TELLER décrite dans "The Journal of the American Chemical Society", vol. 60, page 309, février 1938, correspondant à la norme NFT 45007 de novembre 1987.

Dans ces cas d'utilisation de charge claire, il est nécessaire d'utiliser un agent de couplage et/ou de recouvrement choisi parmi les agents connus de l'homme de l'art. Comme exemples d'agents de couplage préférentiels, on peut citer les alcoxysilanes sulfurés du type polysulfure de bis-(3-trialcoxysilylpropyle), et parmi ceux-ci notamment le tétrasulfure de bis-(3-triéthoxysilylpropyle) commercialisé par la Société DEGUSSA sous les dénominations Si69 pour le produit liquide pur et X50S pour le produit solide (coupage 50/50 en poids avec du noir N330). Comme exemples d'agents de recouvrement on peut citer un alcool gras, un alkylalcoxysilane tel qu'un hexadécyltriméthoxy ou triéthoxysilane respectivement commercialisés par la Société DEGUSSA sous les dénominations Si116 et Si216, la diphénylguanidine, un polyéthylène glycol, une huile silicone éventuellement modifié au moyen des fonctions OH ou alcoxy. L'agent de recouvrement et/ou de couplage est utilisé dans un rapport pondéral par rapport à la charge claire ≥ à 1/100 et ≤ à 20/100, et préférentiellement compris entre 2/100 et 15/100.

Les compositions élastomériques de remplissage interne ou mélanges coussins conformes à l'invention, disposés dans la zone basse, sont par exemple les profilés situés axialement à l'extérieur du retournement de l'armature de carcasse, les profilés de renforcement des bourrelets du pneu disposés entre le retournement de l'armature de carcasse et le profilé de renforcement de bourrelet disposé radialement au dessus de la tringle et adjacent à ladite tringle et/ou axialement à l'extérieur du retournement de l'armature de carcasse.

Parmi les élastomères diéniques pouvant être utilisés en coupage avec le caoutchouc naturel ou un polyisoprène synthétique à majorité d'enchaînements cis-1,4, on peut citer un polybutadiène (BR) de préférence à majorité d'enchaînements cis-1,4, un copolymère styrène-butadiène (SBR) solution ou émulsion, un copolymère butadiène-isoprène (BIR) ou bien encore un terpolymère styrène-butadiène-isoprène (SBIR). Ces élastomères peuvent être des élastomères modifiés en cours de polymérisation ou après polymérisation au moyen d'agents de ramification comme un divinylbenzène ou d'agents d'étoilage tels que des carbonates, des halogénoétains, des halogénosiliciums ou bien encore au moyen d'agents de fonctionnalisation conduisant à un greffage sur la chaîne ou en bout de chaîne de fonctions oxygénées carbonyle, carboxyle ou bien d'une fonction amine comme par exemple par action de la diméthyl ou de la diéthylamino benzophénone. Dans le cas de coupages de caoutchouc naturel ou de polyisoprène synthétique à majorité d'enchaînements cis-1,4 avec un ou plusieurs des élastomères diéniques, mentionnés ci-dessus, le caoutchouc naturel ou le polyisoprène synthétique est utilisé de préférence à un taux majoritaire et plus préférentiellemnt à un taux supérieur à 70 pce.

Lorsqu'une charge claire est utilisée comme seule charge renforçante, les propriétés d'hystérèse et de cohésion sont obtenues en utilisant une silice précipitée ou pyrogénée, ou bien une alumine précipitée ou bien encore un aluminosilicate de surface spécifique BET comprise entre 30 et 260 m²/g. A titre préférentiel, on utilise un taux de charge allant de 20 à 35 pce. Comme exemples non limitatifs de ce type de charge, on peut citer les silices KS404 de la Société Akzo, Ultrasil VN2 ou VN3 et BV3370GR de la Société Degussa, Zeopol 8745 de la Société Huber, Zeosil 175MP ou Zeosil 1165MP de la société Rhodia, HI-SIL 2000 de la Société PPG etc...

En cas de coupage de noir de carbone avec une charge claire, on utilise à titre préférentiel un taux de charge claire allant de 25 à 40 pce.

Comme autres exemples de charges renforçantes ayant la morphologie et les fonctions de surface SiOH et/ou AlOH des matières de type silice et/ou alumine précédemment décrites et pouvant être utilisées selon l'invention en remplacement partiel ou total de celles-ci, on peut citer les noirs de carbone modifiés soit au cours de la synthèse par addition à l'huile d'alimentation du four d'un composé du silicium et/ou d'aluminium soit après la synthèse en ajoutant, à une suspension aqueuse de noir de carbone dans une solution de silicate et/ou d'aluminate de sodium, un acide de façon à recouvrir au moins partiellement la surface du noir de carbone de fonctions SiOH et/ou AlOH. Comme dans le cas des charges claires précédentes, la surface spécifique de la charge est comprise entre 30 et 260 m2/g, et le taux global de charge matière de type silice et/ou alumine est supérieur ou égal à 15 pce, de préférence supérieur à 25 pce, et inférieur ou égal à 35 pce; comme exemples non limitatifs de ce type de charges carbonées avec en surface des fonctions SiOH et/ou AlOH, on peut citer les charges type CSDP décrites dans la Conférence N° 24 du Meeting ACS, Rubber Division, Anaheim, Californie, 6-9 mai 1997 ainsi que celles de la demande de brevet EP-A-0 799 854.

Comme autres charges pouvant être également utilisées pour obtenir les compositions diéniques de remplissage interne ayant les propriétés de renforcement et hystérèse conformes à l'invention, on peut utiliser des coupages d'un ou plusieurs noirs de carbone avec une ou plusieurs des autres charges déjà citées ayant en surface des fonctions SiOH et/ou AlOH, le taux global de charge étant compris entre 15 et 50 pce, de préférence compris entre 20 et 45 pce, et le taux de charge avec les fonctions de surface SiOH et /ou AlOH supérieur ou égal au taux de noir de carbone moins cinq.

Enfin, dans les buts d'améliorer la mise en oeuvre et/ou le coût des compositions conformes à l'invention sans que les caractéristiques d'hystérèse et de cohésion soient fondamentalement modifiées., la charge ou les coupages de charges renforçantes précédemment décrits peuvent être en partie remplacées par une charge moins renforçante comme un carbonate de calcium broyé ou précipité, un kaolin ... à la condition de remplacer x pce de charge renforçante par x + 5 parties de charge moins renforçante, x étant inférieur à 15 pce.

Les compositions conformes à l'invention peuvent réticuler sous l'action du soufre, des peroxydes ou de bismaléïmides avec ou sans soufre. Elles peuvent également contenir les autres constituants habituellement utilisés dans les mélanges de caoutchouc, comme des plastifiants, des pigments, des antioxydants, des accélérateurs de réticulation tels que les dérivés du benzothiazole, la diphénylguanidine.

Les compositions conformes à l'invention peuvent être préparées selon des procédés connus de travail thermomécanique des constituants en une ou plusieurs étapes. On peut par exemple les obtenir par un travail thermomécanique en une étape dans un mélangeur interne qui dure de 3 à 7 minutes avec une vitesse de rotation des palettes de 50 tours par minute ou en deux étapes dans un mélangeur interne qui durent respectivement 3 à 5 minutes et 2 à 4 minutes suivies d'une étape de finition effectuée à environ 80°C pendant laquelle sont incorporés le soufre et l'accélérateur, dans le cas d'une composition réticulée au soufre.

L'invention est illustrée par les exemples qui suivent.

Dans tous les exemples sauf indication différente, les compositions sont données en parties en poids.
Dans ces exemples, qui peuvent être conformes ou non conformes à l'invention, les propriétés des compositions sont évaluées comme suit:

### Viscosité Mooney

La viscosité Mooney ML (1+4) est mesurée selon la norme ASTM D-1646.

### Rhéométrie

Les mesures de rhéométrie sont effectuées par mesure de couple sur un rhéomètre de Monsanto modèle 100S. Elles sont destinées à suivre le processus de vulcanisation en déterminant le temps To en minutes qui correspond au retard de vulcanisation et le temps T99 en minutes qui correspond à 99% du couple maximum mesuré.

### Modules d'allongement

On mesure les modules d'allongement à 100% (MA100) et à 300% (MA300) selon la norme ISO37-1977.

### Indice de cassage Scott

Ces indices sont mesurés à 23°C ou 100°. On détermine la contrainte à la rupture (FR) en MPa et l'allongement à la rupture (AR) en %.

### Indice de déchirabilité

Ces indices sont mesurés à 100°. On détermine la force (FRD) en Mpa et l'allongement rupture (ARD) en % sur une éprouvette de dimensions 10 x 105 x 2,5 mm entaillée au centre de sa longueur sur une profondeur de 5 mm.

### Pertes hystérétiques (PH)

Les pertes hystérétiques (PH), ou hystérèse, sont mesurées par rebond à 60° selon la norme ISO R17667 et exprimées en %.

### Exemple 1

Cet exemple a pour but de comparer des compositions de caoutchouc naturel renforcées avec de la silice à titre de charge majoritaire par rapport à des compositions témoins à base de noir de carbone majoritaire. Ces compositions sont données dans le tableau 1. Elles mettent en oeuvre, dans le cas de l'essai 1, une composition à base de silice majoritaire et de noir de carbone avec l'agent de recouvrement pour la silice Si116 (hexadécyltriméthoxysilane de Degussa), dans le cas de l'essai 2, une composition à base de silice majoritaire et de noir de carbone avec en tant qu'agent de recouvrement de la silice du polydiméthylsiloxane de masse moléculaire voisine de 400 (PDMS), dans le cas de l'essai 3, une composition à base de noir de carbone majoritaire et de silice liée à l'élastomère avec l'agent de liaison X50S de Degussa, et dans le cas de l'essai 4 une composition à base de N330. Les essais 3 et 4 sont représentatifs de compositions connues servant de référence. Toutes ces compositions sont vulcanisables au soufre.

Les caractéristiques des constituants sont les suivantes:
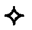 Caoutchouc naturel peptisé de Mooney ML (1+4) à 100° égal à 60
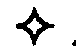 Antioxydant : N-(1,3-diméthyl butyl) N'-phényl p-phénylène diamine
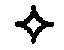 Soufre soluble
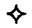 Agents accélérateurs de vulcanisation

Les compositions des essais 1 à 4 sont obtenues par mise en oeuvre de tous les ingrédients, sauf le soufre et les accélérateurs, par un travail thermomécanique en une étape dans un mélangeur interne qui dure environ 4 minutes avec une vitesse de rotation des palettes de 50 tours par minute jusqu'à atteindre une température de tombée de 170° suivi d'une étape de finition effectuée à 80°C, pendant laquelle sont incorporés le soufre et les accélérateurs de vulcanisation.

**Tableau 1**

| Composition | Essai 1 Exemple | Essai 2 Exemple | Essai 3 Témoin | Essai 4 Témoin |
|---|---|---|---|---|
| Caoutchouc naturel | 100 | 100 | 100 | 100 |
| UVN3 | 35 | 35 | 15 | - |
| Noir N330 | 5 | 5 | - | 35 |
| Noir N347 | - | - | 40 | - |
| X50S | - | - | 3 | - |
| Si116 | 5,00 | - | - | - |
| PDMS | - | 2,00 | - | - |
| ZnO | 7,00 | 7,00 | 7,00 | 2,10 |
| Ac. Stéarique | 1,00 | 1,00 | 2,00 | 1,40 |
| Antioxydant | 1,50 | 1,50 | 1,50 | 0,70 |
| | | | | |
| Soufre | 1,75 | 1,75 | 1,80 | 1,75 |
| Accélérateurs | 1,50 | 1,51 | 1,25 | 1,00 |

La vulcanisation est effectuée à 140° pendant un temps suffisant pour atteindre 99 % du couple maximum au rhéomètre.

On compare entre elles les propriétés de ces quatre compositions. Les résultats sont consignés dans le tableau 2.

**Tableau 2**

| Composition | Essai 1 Exemple | Essai 2 Exemple | Essai 3 Témoin | Essai 4 Témoin |
|---|---|---|---|---|
| Caoutchouc naturel | 100 | 100 | 100 | 100 |
| UVN3 | 35 | 35 | 15 | - |
| Noir N330 | 5 | 5 | - | 35 |
| Noir N347 | - | - | 40 | - |
| X50S | - | - | 3 | - |
| Si116 | 5,00 | - | - | - |
| PDMS | - | 2,00 | - | - |
| MA100 | 1,0 | 1,2 | 2,9 | 1,7 |
| PH 60° | 13,5 | 15 | 18 | 12 |
| | | | | |
| Indice de cassage à 100°C AR% | 800 | 780 | 490 | 630 |
| Indice de déchirabilité à 100°C ARD% | 510 | 500 | 230 | 80 |

On constate que la cohésion des compositions 1 et 2 conformes à l'invention, cohésion évaluée par l'allongement rupture à 100 °C dans le test de déchirabilité est bien supérieure à celle des compositions 3 et 4 des témoins non conformes à l'invention.

### Exemple 2

Cet exemple a pour but de comparer des compositions renforcées avec de la silice à titre de charge majoritaire en faisant varier la nature des agents de liaison et de recouvrement, le système de vulcanisation étant ajusté pour que les rigidités modules d'élongation à 100% soient assez proches pour tirer des conclusions fiables quant aux effets des paramètres étudiés. Les compositions conformes à l'invention sont données dans le tableau 3. Elles mettent en oeuvre, dans les cas des essais 5, 6 et 7 des compositions avec comme charge unique de la silice au taux de 30 pce avec respectivement un agent de couplage X50S, un agent de recouvrement polyéthylène glycol de masse moléculaire 4000 et un autre agent de recouvrement polydiméthylsiloxane. Dans les cas des essais 8 à 12, la charge renforçante est constituée par un coupage de silice et de 5 pce de N330.

**Tableau 3**

| Composition | Essai 5 | Essai 6 | Essai 7 | Essai 8 | Essai 9 | Essai 10 | Essai 11 | Essai 12 |
|---|---|---|---|---|---|---|---|---|
| Caoutchouc naturel | 100 | 100 | 100 | 100 | 100 | 100 | 100 | 100 |
| UVN3 | 30 | 30 | 30 | 25 | 30 | 35 | 30 | 35 |
| N330 | - | - | - | 5 | 5 | 5 | 5 | 5 |
| ZnO | 7 | 7 | 7 | 7 | 7 | 7 | 7 | 7 |
| Ac. stéarique | 1 | 1 | 1 | 1 | 1 | 1 | 1 | 1 |
| Antioxydant | 1,5 | 1,5 | 1,5 | 1,5 | 1,5 | 1,5 | 1,5 | 1,5 |
| X50S | 7 | - | - | - | - | - | - | - |
| PEG4000 | - | 4,3 | - | - | - | - | 4,3 | 5 |
| PDMS | - | - | 1,7 | 1,4 | 1,7 | 2,0 | - | - |
| | | | | | | | | |
| Soufre | 1,75 | 1,75 | 1,75 | 1,75 | 1,75 | 1,75 | 1,75 | 1,75 |
| Accélérateurs | 1,51 | 2,00 | 1,51 | 1,51 | 1,51 | 1,51 | 2,00 | 2,00 |

Les compositions et la vulcanisation des essais 5 à 12 sont obtenues dans les mêmes conditions que dans l'exemple 1.

On compare entre elles les propriétés de ces huit compositions. Les résultats sont consignés dans le tableau 4.

**Tableau 4**

| Composition | Essai 5 | Essai 6 | Essai 7 | Essai 8 | Essai 9 | Essai 10 | Essai 11 | Essai 12 |
|---|---|---|---|---|---|---|---|---|
| MA100 | 1,27 | 1,16 | 0,93 | 0,96 | 1,00 | 0,98 | 1,25 | 1,37 |
| PH 60° | 9,4 | 9,6 | 11,7 | 11,4 | 12,7 | 15,6 | 11,3 | 13 |
| AR (100°C) | 733 | 770 | 855 | 813 | 856 | 867 | 762 | 736 |
| ARD (100°C) | 590 | 371 | 793 | 538 | 726 | 685 | 277 | 307 |
| FRD (100°) | 84 | 38 | 60 | 51 | 67 | 62 | 38 | 38 |

Pour les essais 5, 6 et 7, on constate qu'à taux de charge silice constant et conforme à l'invention, l'agent de couplage X50S fournit de façon étonnante des résultats de déchirabilité encadrés par ceux obtenus avec l'agent de recouvrement PEG4000 et l'agent de recouvrement PDMS.

Pour les essais 8, 9 et 10 en présence de l'agent de recouvrement PDMS, avec un taux de noir de 5 pce et un taux de silice croissant de 25 à 35 pce, les meilleurs résultats de déchirabilité sont obtenus pour le taux intermédiaire de silice de 30 pce.

En comparant les résultats des essais 7 et 9 d'une part et 6 et 11 d'autre part, on remarque que 5 pce de noir de carbone ajoutés à 30 pce de silice ne change pas fondamentalement les résultats de déchirabilité en présence des agents de recouvrement PDMS ou PEG4000.

La comparaison des résultats des essais 11 et 12 montre que le passage de 30 à 35 pce de silice en présence de 5 pce de noir carbone améliore légèrement les résultats quand on utilise l'agent de recouvrement PEG 4000 alors que l'effet inverse est observé avec l'agent de recouvrement PDMS (essais 9 et 10).

### Exemple 3

Cet exemple a pour but de comparer des compositions renforcée avec de la silice à titre de charge unique ou majoritaire, la matrice élastomérique étant à base de caoutchouc naturel pur ou en coupage avec un autre élastomère diénique ou à base de polyisoprène synthétique à fort taux de cis-1,4. Ces compositions sont données dans le tableau 5. Elles mettent en oeuvre, dans les cas des essais 13, 14 et 15 du caoutchouc naturel chargé avec des taux croissants de charge. Dans les cas des essais 16 et 17 le caoutchouc naturel de l'essai 15 est remplacé par un coupage de caoutchouc naturel avec un autre élastomère diénique minoritaire respectivement un polybutadiène cis-1,4 (BR cis-1,4) obtenu avec un catalyseur à base de titane et un SBR solution de Mooney ML (1+4) égal à 54, de Tg - 48 °C dont le % d'enchaînements -1,2 est de 24 et le % de styrène de 16,5. Dans le cas de l'essais 19 le caoutchouc naturel avec 30 parties de charge silice de l'essai 18 est remplacé par un polyisoprène synthétique à fort taux de cis-1,4. Dans le cas de l'essai 20, non conforme à l'invention, le coupage de caoutchouc naturel et de BR cis-1,4 de l'essai 16 est chargé avec 30 parties de N330.

**Tableau 5**

| Compositions | Essai 13 | Essai 14 | Essai 15 | Essai 16 | Essai 17 | Essai 18 | Essai 19 | Essai 20 témoin |
|---|---|---|---|---|---|---|---|---|
| Caoutchouc naturel | 100 | 100 | 100 | 60 | 60 | 100 | - | 60 |
| Polyisoprène cis | - | - | - | - | - | - | 100 | - |
| SBR solution | - | - | - | - | 40 | - | - | - |
| BR cis-1,4 | - | - | - | 40 | - | - | - | 40 |
| UVN3 | 15 | 15 | 30 | 30 | 30 | 30 | 30 | - |
| N330 | - | 15 | 15 | 15 | 15 | - | - | 30 |
| Si116 | 2 | 2 | 4 | 4 | 4 | 4 | 4 | - |
| ZnO | 5 | 5 | 5 | 5 | 5 | 5 | 5 | 5 |
| Ac. Stéarique | 1 | 1 | 1 | 1 | 1 | 1 | 1 | 1 |
| Antioxydant | 1,5 | 1,5 | 1,5 | 1,5 | 1,5 | 1,5 | 1,5 | 1,5 |
| Diphénylguanidine | 0,2 | 0,2 | 0,4 | 0,4 | 0,4 | 0,4 | 0,4 | - |
| | | | | | | | | |
| Soufre | 1,6 | 1,6 | 1,6 | 1,6 | 1,6 | 1,6 | 1,6 | 1,6 |
| Accélérateurs | 1,0 | 0,55 | 0,55 | 0,55 | 0,55 | 1,0 | 1,0 | 0,55 |

Les compositions et la vulcanisation des essais 13 à 20 sont obtenues dans les mêmes conditions que dans l'exemple 1.

On compare entre elles les propriétés de ces huit compositions. Les résultats sont consignés dans le tableau 6.

**Tableau 6**

| Compositions | Essai 13 | Essai 14 | Essai 15 | Essai 16 | Essai 17 | Essai 18 | Essai 19 | Essai 20 témoin |
|---|---|---|---|---|---|---|---|---|
| Caoutchouc naturel | 100 | 100 | 100 | 60 | 60 | 100 | - | 60 |
| Polyisoprène | - | - | - | - | - | - | 100 | - |
| SBR solution | - | - | - | - | 40 | - | - | - |
| BR cis-1,4 | - | - | - | 40 | - | - | - | 40 |
| UVN3 | 15 | 15 | 30 | 30 | 30 | 30 | 30 | - |
| N330 | - | 15 | 15 | 15 | 15 | - | - | 30 |
| | | | | | | | | |
| MA100 | 0,85 | 0,91 | 0,93 | 0,87 | 0,97 | 0,97 | 0,69 | 1,26 |
| PH | 5,4 | 11,0 | 16,5 | 24,4 | 25,2 | 8,2 | 11,5 | 12,8 |
| AR(100°C) | 834 | 809 | 845 | 864 | 830 | 820 | 857 | 564 |
| ARD(100°C) | 578 | 359 | 456 | 401 | 474 | 552 | 626 | 146 |
| FRD (100°C) | 36 | 31 | 41 | 25 | 34 | 36 | 28 | 18 |

Pour les compositions conformes à l'invention des essais 13 à 19, les caractéristiques d'allongement rupture dans le test de déchirabilité à 100 °C sont bien supérieures à celles obtenues avec la composition non conforme à l'invention avec 30 pce de noir de carbone. Le caoutchouc naturel ou un polyisoprène synthétique cis-1,4 ou un coupage de caoutchouc naturel majoritaire avec un autre élastomère diénique permet d'obtenir une cohésion élevée avec la charge silice ou des coupages de silice et de noir de carbone conformes à l'invention.

En résumé, l'utilisation des compositions de l'invention soit avec la charge noir de carbone utilisée à un taux voisin de 25 pce, soit avec une charge blanche de type silice et/ou alumine utilisée seule ou à un taux majoritaire d'environ 35 pce indépendamment du fait que l'on emploie un agent de couplage ou de recouvrement, permet de montrer que, par rapport aux compositions connues à base de noir de carbone utilisé seul ou à titre de charge majoritaire, les effets d'agressions mécaniques du type déformations imposées sont moins pénalisants et permettent d'augmenter la durée de vie du pneumatique, d'autant plus que les compositions décrites sont faiblement hystérétiques, avec comme conséquences un plus faible échauffement interne au cours du roulage et une dégradation thermique et/ou thermooxydante diminuée de l'armature de carcasse.

Bien entendu, l'invention n'est pas limitée aux exemples de réalisation précédemment décrits à partir desquels on peut envisager d'autres modes de réalisation.

## Revendications

1. Enveloppe de pneumatique dont la zone basse comporte une composition de caoutchouc de remplissage interne comprenant une charge renforçante,
**caractérisée en ce que** ladite composition est à base de caoutchouc naturel ou de polyisoprène synthétique à majorité d'enchaînements cis-1,4, et **en ce que** ladite charge renforçante est constituée :
(i) soit par une charge blanche de type silice et/ou alumine comportant des fonctions de surface SiOH et/ou AlOH choisie dans le groupe formé par les silices précipitées ou pyrogénées, les alumines ou les aluminosilicates, ou bien encore les noirs de carbone modifiés en cours ou après la synthèse de façon à recouvrir au moins partiellement la surface de fonctions SiOH et/ou AlOH, de surface spécifique comprise entre 30 et 260 m²/g employée à un taux supérieur ou égal à 15 pce et inférieur ou égal à 40 pce,
(ii) soit par un coupage de noir de carbone de surface spécifique BET comprise entre 30 et 160 m²/g et une charge blanche décrite en (i), dans lequel le taux global de charge est supérieur ou égal à 15 pce et inférieur ou égal à 50 pce et le taux en pce de charge blanche est supérieur ou égal au taux de noir de carbone en pce moins 5.

2. Enveloppe de pneumatique selon la revendication 1, **caractérisée en ce que** ladite charge renforçante est constituée, dans ledit cas (i), d'une charge blanche renforçante selon un taux de 20 à 35 pce.

3. Enveloppe de pneumatique selon une des revendications 1 ou 2, **caractérisée en ce que** ladite composition comprend au moins un autre élastomère diénique, le caoutchouc naturel ou le polyisoprène synthétique étant présent(s) à un taux majoritaire par rapport au taux de l'autre ou des autres élastomères diéniques.

4. Enveloppe de pneumatique selon la revendication 3, **caractérisée en ce que** ledit ou lesdits élastomères diéniques sont choisis parmi un polybutadiène à majorité d'enchaînements cis-1,4, un copolymère de butadiène et de styrène émulsion ou solution, un copolymère de butadiène et d'isoprène, un terpolymère de styrène, butadiène et isoprène.

5. Enveloppe de pneumatique selon la revendication 3 ou 4, **caractérisée en ce que** ledit ou lesdits élastomères diéniques sont modifiés en cours de polymérisation ou après polymérisation au moyen d'agents de ramification, d'étoilage ou de fonctionnalisation conduisant à un greffage sur la chaîne ou en bout de chaîne de fonctions oxygénées, carbonyle, carboxyle, ou amine.

6. Enveloppe de pneumatique selon une des revendications précédentes, ladite zone basse comportant, d'une part, un ou plusieurs profilés qui sont situés axialement à l'extérieur du retournement de l'armature de carcasse et, d'autre part, des profilés de renforcement des bourrelets de ladite enveloppe qui sont respectivement disposés radialement au-dessus des tringles en étant adjacents auxdites tringles, **caractérisée en ce que** l'un au moins desdits profilés comprend ladite composition de remplissage interne.

7. Enveloppe de pneumatique selon une des revendications précédentes, **caractérisée en ce que** ladite composition comprend un agent de couplage et/ou de recouvrement associé à ladite charge blanche renforçante selon un rapport en poids (agent de couplage et/ou de recouvrement/ charge blanche renforçante) qui est supérieur à 1/100 et inférieur à 20/100.

8. Enveloppe de pneumatique selon la revendication 7, **caractérisée en ce que** ledit rapport en poids (agent de couplage et/ou de recouvrement/ charge blanche renforçante) est compris entre 2/100 et 15/100.

## Patentansprüche

1. Luftreifenmantel, dessen unterer Bereich eine Kautschukzusammensetzung zur Innenfüllung umfaßt, die einen verstärkenden Füllstoff enthält,
**dadurch gekennzeichnet, daß** die Zusammensetzung eine Zusammensetzung auf der Basis von Naturkautschuk oder von synthetischem Polyisopren mit überwiegender als-1,4-Verknüpfung ist und daß der verstärkende Füllstoff besteht aus:
(i) einem weißen Füllstoff vom Kieselsäure- und/oder Aluminiumoxid-Typ, der SiOH- und/oder AlOH-Oberflächengruppen aufweist, der ausgewählt ist unter den Fällungskieselsäuren, den pyrogenen Kieselsäuren, den Aluminiumoxiden, den Aluminosilikaten und den Rußarten, die während oder nach der Synthese so modifiziert werden, daß ihre Oberfläche mit mindestens teilweise SiOH- und/oder AlOH-Gruppen bedeckt ist, mit einer spezifischen Oberfläche im Bereich von 30 bis 260 m²/g, der in einem Anteil von 15 pce oder darüber und 40 pce oder darunter eingesetzt wird, oder
(ii) einem Verschnitt aus Ruß mit einer spezifischen BET-Oberfläche, die im Bereich von 30 bis 160 m²/g liegt, und einem weißen Füllstoff, der unter (i) beschrieben ist, wobei der Gesamtgehalt an Füllstoff größer als oder gleich 15 pce oder kleiner als oder gleich 50 pce ist und wobei der Gehalt an weißem Füllstoff in pce größer als oder gleich dem Gehalt an Ruß in pce minus 5 ist.

2. Luftreifenmantel nach Anspruch 1, **dadurch gekennzeichnet, daß** der verstärkende Füllstoff im Fall (i) aus einem weißen verstärkenden Füllstoff besteht, dessen Anteil 20 bis 35 pce beträgt.

3. Luftreifenmantel nach einem der Ansprüche 1 oder 2, **dadurch gekennzeichnet, daß** die Zusammensetzung mindestens ein weiteres Dienelastomer enthält, wobei der Naturkautschuk oder das synthetische Polyisopren in einem überwiegenden Anteil, bezogen auf den Anteil des oder der weiteren Dienelastomere, enthalten ist.

4. Luftreifenmantel nach Anspruch 3, **dadurch gekennzeichnet, daß** das oder die Dienelastomere ausgewählt werden unter Polybutadienen mit überwiegender cis-1,4-Verknüpfung, durch Emulsions- oder Lösungspolymerisation erhaltenen Butadien-Styrol-Copolymeren, Butadien-Isopren-Copolymeren, Styrol-Butadien-Isopren-Terpolymeren.

5. Luftreifenmantel nach Anspruch 3 oder 4, **dadurch gekennzeichnet, daß** das oder die Dienelastomere während der Polymerisation oder nach der Polymerisation mit Mitteln zur Verzweigung, Mitteln zur sternförmigen Vernetzung oder Funktionalisierung modifiziert werden, was zu einer Aufpfropfung von sauerstoffhaltigen Gruppen, Carbonyl, Carboxy, oder Amin auf die Kette oder am Kettenende führt.

6. Luftreifenmantel nach einem der vorhergehenden Ansprüche, wobei der untere Bereich einerseits eines oder mehrere Profilteile, die axial auf der Außenseite des Umschlags der Karkassenbewehrung gelegen sind, und andererseits Verstärkungsprofilteile für die Wülste des Mantels aufweist, die radial oberhalb der Wulstkerne und benachbart zu den Wulstkernen angeordnet sind, **dadurch gekennzeichnet, daß** mindestens eines der Profilteile die Zusammensetzung zur Innenfüllung aufweist.

7. Luftreifenmantel nach einem der vorhergehenden Ansprüche, **dadurch gekennzeichnet, daß** die Zusammensetzung ein Kupplungsmittel und/oder ein Bedeckungsmittel enthält, das mit dem verstärkenden weißen Füllstoff in einem Gewichtsverhältnis (Kupplungsmittel und/oder Bedeckungsmittel/verstärkender weißer Füllstoff) kombiniert ist, das größer als 1/100 und kleiner als 20/100 ist.

8. Luftreifenmantel nach Anspruch 7, **dadurch gekennzeichnet, daß** das Gewichtsverhältnis (Kupplungsmittel und/oder Bedeckungsmittel / verstärkender weißer Füllstoff) im Bereich von 2/100 bis 15/100 liegt.

## Claims

1. A tyre, the bottom zone of which comprises a rubber internal filler composition comprising a reinforcing filler,
**characterised in that** said composition is based on natural rubber or synthetic polyisoprene having a majority of cis-1,4 linkages, and **in that** said reinforcing filler is constituted:
(i) either by a white filler of the silica and/or alumina type comprising SiOH and/or AIOH surface functions, which is selected from the group formed by precipitated or fumed silicas, aluminas or alumosilicates, or alternatively by carbon blacks modified during or after synthesis so as to cover the surface at least in part with SiOH and/or AlOH functions, of a specific surface area of between 30 and 260 m²/g used in an amount greater than or equal to 15 phr and less than or equal to 40 phr,
(ii) or by a blend of carbon black of a BET specific surface area of between 30 and 160 m²/g and a white filler described under (i), in which the total amount of filler is greater than or equal to 15 phr and less than or equal to 50 phr and the amount in phr of white filler is greater than or equal to the amount of carbon black in phr minus 5.

2. A tyre according to Claim 1, **characterised in that** said reinforcing filler is formed, in said case (i), of a reinforcing white filler in an amount from 20 to 35 phr.

3. A tyre according to one of Claims 1 or 2, **characterised in that** said composition comprises at least one other diene elastomer, the natural rubber or the synthetic polyisoprene being present in a majority amount relative to the amount of the other diene elastomer or elastomers.

4. A tyre according to Claim 3, **characterised in that** said diene elastomer or elastomers are selected from among a polybutadiene having a majority of cis-1,4 linkages, a butadiene-styrene emulsion or solution copolymer, a butadiene-isoprene copolymer or a styrene-butadiene-isoprene terpolymer.

5. A tyre according to Claim 3 or 4, **characterised in that** said diene elastomer(s) are modified during polymerisation or after polymerisation by means of branching, starring or functionalising agents, resulting in the grafting on the chain or at the end of the chain of oxygenated carbonyl, carboxyl or amine functions.

6. A tyre according to any one of the preceding claims, said bottom zone comprising, on one hand, one or more profiled members located axially to the outside of the upturn of the carcass reinforcement and, on the other hand, profiled members for reinforcing the beads of said tyre which are respectively arranged radially above the bead wires, being adjacent to said bead wires, **characterised in that** one at least of said profiled members comprises said internal filler composition.

7. A tyre according to any one of the preceding claims, **characterised in that** said composition comprises a coupling and/or covering agent associated with said reinforcing white filler in a weight ratio of coupling agent and/or covering agent to reinforcing white filler greater than 1/100 and less than 20/100.

8. A tyre according to Claim 7, **characterised in that** said weight ratio of coupling agent and/or covering agent to reinforcing white filler is between 2/100 and 15/100.
